(19) Europäisches Patentamt

European Patent Office

Office européen des brevets

(11) Publication number: **0 267 980 B1**

(12) **EUROPEAN PATENT SPECIFICATION**

(45) Date of publication of patent specification: **23.10.91**   (51) Int. Cl.⁵: **B29C  53/56,** B29C 53/76,
                                                                            B64C 27/32

(21) Application number: **86115978.8**

(22) Date of filing: **18.11.86**

(54) **Method of fabricating a rotor hub of composite material.**

(43) Date of publication of application:
**25.05.88 Bulletin  88/21**

(45) Publication of the grant of the patent:
**23.10.91 Bulletin  91/43**

(84) Designated Contracting States:
**DE FR GB IT**

(56) References cited:
EP-A- 0 105 419
EP-A- 0 122 033
DE-A- 3 207 573

AUTOMOTIVE ENGINEERING, vol. 93, no. 5,
May 1985, pages 34-41, Society of Auto-
motive Engineers, Inc., Warrendale, Penn-
sylvania, US; "Fiber reinforced move inside
engine"

(73) Proprietor: **THE BOEING COMPANY**
**7755 East Marginal Way South**
**Seattle Washington 98124(US)**

(72) Inventor: **Frank, Ed**
**317 Spruce Street**
**Glenolden, Pennsylvania(US)**
Inventor: **Ford, Robert J.**
**532 South Central Boulevard**
**Broomall, Pennsylvania(US)**

(74) Representative: **Dreiss, Hosenthien & Fuhlen-**
**dorf**
**Gerokstrasse 6**
**W-7000 Stuttgart 1(DE)**

## Description

The present invention relates to the fabrication of rotor hubs for helicopter rotor systems, and in particular to the fabrication of the rotor hubs from composite material and using a winding or wrapping (hereinafter winding) technique.

According to composite technology, a resin preimpregnated tape having, for example, fiberglass filament is utilized with or without additional resin adhesive to construct the particular part desired. The final part is built-up of a successive application of layers (layup) of the tape to a working surface as, for example, a mandrel. The resulting part is light in weight and highly load redundant, so it is more desirable than a corresponding part made from traditional materials such as steel, aluminium, etc.

Instead of filament tape, individually filaments may be used. In either case, the dispensing technique can be identical.

Helicopter rotor system design technology has turned in recent years to the use of composite material. Composite materials have been shown to improve life, damage tolerance and fail safety when substituted for metal in helicopter rotor hubs due to their relative notch insentitivity, slow crack growth, superior fatigue strain endurance and high strain energy storage prior to fiber failure. Composites are not susceptible to corrosion and are readily inspectable using ultrasonic and/or radiographic techniques to detect flaws in their laminar and fiber content. Their high specific strength and stiffness offer the potential of significant weight reduction.

A method of fabricating a rotor hub of a fully articulated helicopter rotor system in which the rotor hub includes a central portion and at least two pairs of lug arms each having a pair of lugs and extending from the central portion is known from EP-A-105 419. According to that known method dispensed material is seperately wound about each pair of diametrically opposite lugs only to form individually made closed loops. Closed loop and its associated core are then brought into assembly with the other similarly formed closed loops and associated cores. This technique (method) is relatively time consuming.

The technical problem is to significantly save time in fabricating a composite rotor hub.

This technical problem is solved by a method of fabricating a rotor hub of a fully articulated helicopter rotor system, the rotor hub including a central portion and at least two pairs of lug arms each having a pair of lugs and extending from the central portion, said method comprising the steps of:

forming a mandrel including a central portion and an equal number of pairs of lug arms to that of the rotor hub extending from the central portion;

dispensing a composite material onto the mandrel and winding said dispensed material about a pair of lugs and an associated part of the central portion of the mandrel to form a continuous closed loop of composite material to a desired width and thickness;

repeating the winding step for each pair of lug arms and its associated part of the central portion of the mandrel, thereby forming as many continuous closed loops of composite material as there are lug arms; and

subjecting the assembly including the mandrel and wound continuous closed loops to a curing cycle to at least structuralize the continuous closed loops.

According to the present invention a mandrel is formed and the winding of dispensed material is performed to form the closed loops in one continuous operation. The advantage is the significant savings in man-hours to fabricate a composite rotor hub.

Moreover, each loop can be completely fabricated before the next loop is fabricated, or they may be fabricated in alternative fashion.

Four figures have been selected to illustrate a preferred embodiment of the present invention. Included are:

Fig. 1, which is a perspective view of a four bladed rotor system including a rotor hub which can be fabricated according to the present invention;

Fig. 2, which is a perspective view of a mandrel used to fabricate the rotor hub of the rotor system of Fig. 1;

Fig. 3, which is a perspective view of a robot which is used in the fabrication of the rotor hub of Fig. 2, with the mounting bracket and mandrel rotated for ease of illustration; and

Fig. 4, which is a schematic view illustrating a winding path to form one of the continuous closed loops of the rotor hub.

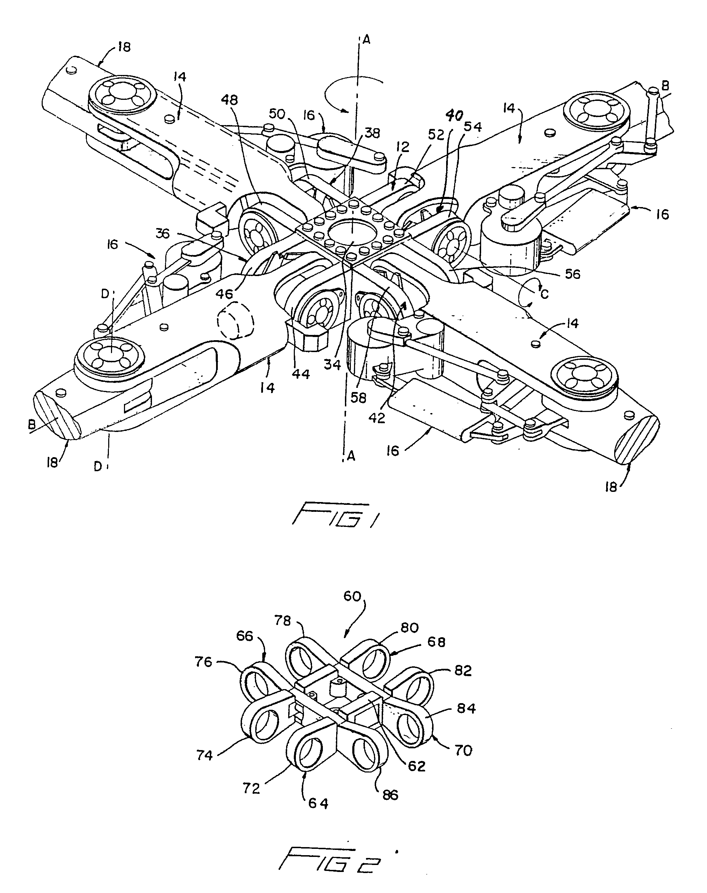

A four bladed rotor system 10 is illustrated in Fig. 1 as one example of a fully articulated rotor system. A two bladed or three bladed rotor system would also be appropriate for application of the present invention.

The four bladed rotor system 10 generally includes a rotor hub 12, four pitch housing 14, four lag damper and blade folding mechanisms 16 and four blades 18. The components assembled as shown in Figure 1 comprise a fully-articulated rotor system, i.e., a system which rotates about axis A-A and in which the rotor blades are permitted pitching, flapping and lead-lag movement about a respective pitch axis B-B, flap axis C-C and lead lag axis D-D.

To permit the pitch, flap and lead-lag movement, elastomeric pitch, flap and lead-lag bearings (not shown in detail) are preferred. The lead-lag bearings and the flap bearings form part of lead-lag hinges and flap hinges . The lead-lag hinges also include pins (commonly referred to as the vertical pins), and the flap hinges also include pins (commonly referred to as the horizontal pins). The pitch bearings, flap bearing and the lead-lag bearings are configured to accommodate both radial and axial loads while permitting angular oscillation. This is accomplished by alternating laminae of elastomeric material, through which shear deflection permits angular oscillatory motions and laminae of metal which restrict a lateral distortion or flow of the elastomer material when under compressive loading. Bearings of this type in a rotor system are know.

The rotor hub 12 includes as shown in Fig. 1 a central portion 34 and two pairs of lug arms 36, 38, 40 and 42. Each lug arm includes two parallel extending lugs 44,46; 48,50; 52,54 and 56,58.

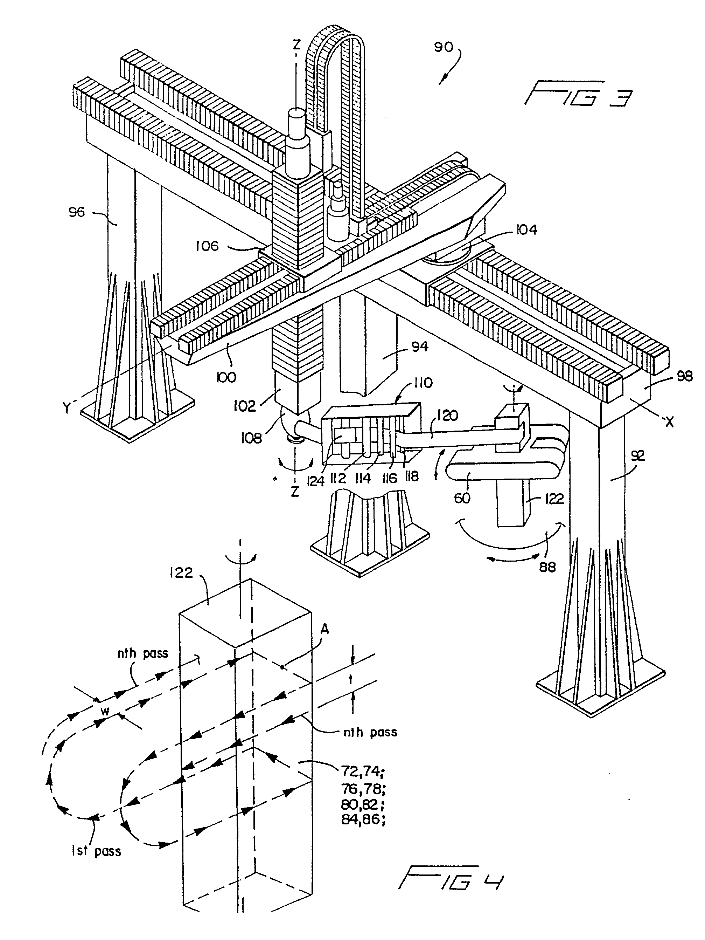

To fabricate a rotor hub such as rotor hub 12 according to the present invention a mandrel is required onto which the composite material is wound. Such a mandrel 60 is shown in Fig. 2. The mandrel 60 necessarily approximates the final shape of the hub 12 and accordingly includes a central portion 62, two pairs of lug arms 64, 66, 68 and 70, with each lug arm comprising two parallel extending lugs 72,74; 76,78; 80,82 and 84,86. The mandrel 60 can be assembled similarly to four cores. Also, the individual cores, which form the central portion and lug pairs of the mandrel, can be fabricated of composite material or of metal. Preferably, however, they are made of composite material. The cores when fabricated of composite material can be formed as layups of composite material tape, or they can be wound. In either case, the fabrication can proceed according to known techniques.

When the mandrel is assembled as shown in Fig. 2, it is mounted on a rotatable floor stand 88 used in conjunction with a programmable manipulator or robot 90 (Fig. 3). The robot 90 is a commercially available apparatus.

Since the robot 90 is commercially available only its basic components will be discussed. The robot 90 is a three-axis machine with translational capability in the X-Y-Z directions and with rotational capability about the Z-axis. Essentially, the robot 90 used in fabricating the rotor hub according to the present invention includes three base pedestals 92, 94 and 96. The base pedestals 92, 94 and 96 support the X-axis way 98 and the Y-axis way 100. The Y-axis way 100 supports a Z-axis way 102. A carriage 104 is mounted to the X-axis way 98 and a carriage 106 is mounted to the Y-axis way 100. The Z-axis way is mounted to the carriage 106. As seen in Fig. 3, the Y-axis way 100 is mounted to the carriage 104 so that the Y-axis way 100 is displaceable along the X-axis.

At one end of the Z-axis way there is mounted a swivel joint 108 which rotates about the Z-axis. Mounted to the swivel joint 108 is a composite material mounting bracket 110 including an idle roller 112 and tension rollers 114, 116 and 118. A supply of tape or filaments 120 is mounted to the bracket 110 and the tape or filaments dispensed onto the mandrel 60. The mandrel 60 is mounted to the rotatable floor stand 88. For this purpose the floor stand 88 includes a mounting post 122 which secures the mandrel 60 to the floor stand 88 and also serves as a fixture about which the composite material is wrapped to aid in forming the central portion of the rotor hub.

Control of robot movement is adaptable to provide the necessary movement of the bracket 110, and is compatible with the movement of the floor stand 88 to achieve the desired dispensing of the composite material and winding of the composite material onto the mandrel 60. Rotation of the floor stand 88 imparts a tension to the composite material while movement of the robot 90 along its three ways and of the swivel joint 108 about the Z-axis produces the winding of the continuous closed loops.

Referring to Fig. 4, the winding path followed to form one continuous closed loop is shown along with the post 122 only. It should be understood, however, that the winding occurs onto the mandrel 60. The composite material is firstly manually dispensed from a supply spool 124 (Fig. 3) and adhered, by any conventional adhesive to point A adjacent to the post 122. The frame 88, and thereby the post 122 is pivoted through an angle of, for example, 30°. The robot 90 then commences its movement to wind the composite material in the direction of the arrows as shown. The pivoting of the post 122 provides the necessary tension to the composite material so that winding can proceed. A single complete pass is shown in Fig. 4. It will be appreciated, however, that the number of passes (n passes) will vary depending on the width (w) and thickness (t) of the loop desired. Also, different types of composite material can be used in successive or alternating passes. For example, one or several passes can be made with a composite material comprising a tape having uni-directional fiber filaments, while one or several other passes can be made with a composite material comprising a tape having its fiber filaments at an angle to the longitudinal axis of the tape, so-called X-ply tape.

The winding procedure described above is repeated for each lug arm desired. As previously noted, a two-bladed rotor hub will have two continuous closed loops, a three-bladed rotor hub will have three continuous closed loops and a four-bladed rotor hub will have four continuous closed loops. The individual loops can be completely wound before the next loop is wound, or the winding can proceed alternatively so that the central portion of the hub will possess an interleaved configuration. Also, in the region of the central portions of the mandrel 60 where the various loops cross over or intersect filler segments may be inserted. The filler segments are preferably formed in advance from composite material.

The composite material for the loop is 'S' glass epoxy prepreg per BMS 8-164, class 'A', type I-1; epoxy impregnated prepreg 'E' glass per BMS 8-79, class III, GR 1, type 1581, Form (1); 45° bias plied epoxy prepreg per BMS 8-164, class A, type III; and T300/F-155 undirectional graphite epoxy prepreg per BMS 8-168. The cores of the mandrel 60 and the filler segments are preferably fabricated of epoxy impregnated prepreg 'E' glass per BMS 8-79, class III, GR 1, type 1581, form (1), or simply molded of chopped fibers.

The finally wound assembly is cured in accordance with the type of material used. For example, if filament wound an initial cure at approximately 65,6° C(150° F) for up to one hour to gel the outside of the assembly, followed by a room cure for about 8 hours is sufficient. If tape is used, curing at 121,1° C(250° F) and 3,45-6,9 bar(50-100 psi) pressure for from 3.5 to 5 hours is sufficient. Once cured the loops, filler segments and cores are structuralized, i.e., capable of accepting external loads. Alternatively, if the cores are not intended to be part of the final assembly, they can be made, for example, of styrofoam. As such, these cores will experience shrinkage during the cure cycle so that they can be easily removed thereafter. According to another variant they can be dissolved after the cure cycle is complete. For this purpose, the cores would be made of a water soluble salt composition such as Paraplast.

## Claims

1. A method of fabricating a rotor hub (12) of a fully articulated helicopter rotor system, the rotor hub (12) including a central portion (34) and at least two pairs of lug arms (36,40;38,42) each having a pair of lugs (44,46;52,54;48,50;56,58) and extending from the central portion (3,4), said method comprising the steps of:
    forming a mandrel (60) including a central portion (62) and an equal number of pairs of lug arms (64,68;66,70) to that of the rotor hub (12) extending from the central portion (62);
    dispensing a composite material onto the mandrel (60) and winding said dispensed material about a pair of lugs (72,82;74,80;76,86;78,84) and an associated part of the central portion (62) of the mandrel (60) to form a continuous closed loop of composite material to a desired width and thickness;
    repeating the winding step for each pair of lug arms (64,68;66,70) and its associated part of the central portion (62) of the mandrel (60), thereby forming as many continuous closed loops of composite material as there are lug arms (64,68;66,70); and
    subjecting the assembly including the mandrel (60) and wound continuous closed loops to a curing cycle to at least structuralize the continuous closed loops.

2. The method as defined in claim 1, wherein each continuous closed loop is wound to the desired width and thickness separately.

3. The method as defined in claim 2, further comprising the step of:
    inserting filler segments between the various loops at their intersection.

4. The method as defined in claim 1, wherein the continuous closed loops are wound alternatively to the desired width and thickness.

5. The method as defined in claim 4, further comprising the step of:
    inserting filler segments between the interleaved intersections of the various loops.

## Revendications

1. Procédé de fabrication d'un moyeu de rotor (12) d'un système de rotor d'hélicoptère complètement articulé, le moyeu de rotor (12) comprenant une partie centrale (34) et au moins deux paires de bras d'ergots (36,40;38,42) comprenant chacun deux ergots (44,46;52,54;48,50;56,58) qui partent de la partie centrale (3,4), ledit procédé comprenant le étapes suivantes:
    - formation d'un mandrin (60) comprenant une partie centrale (62) et un nombre de paires de bras d'ergots (64,68;66,70) égal à celui du moyeu de rotor (12) partant de la partie centrale (62);
    - application d'un matériau composite sur le mandrin (60) et enroulement dudit matériau appliqué autour d'une paire d'ergots (72,82;74,80;76,86;78,84) et d'une partie associée de la partie centrale (62) du mandrin (60) pour former une boucle continue fermée de matériau composite jusqu'à obtenir une largeur et une épaisseur souhaitées;

- répétition de l'opération d'enroulement pour chaque paire de bras d'ergots (64,68;66,70) et de sa partie associée de la partie centrale (62) du mandrin (60), en formant ainsi autant de boucles fermées continues de matériau composite qu'il y a de bras d'ergots (64,68;66,70); et
- soumission de l'ensemble comprenant le mandrin (60 et les boucles fermées enroulées en continu à un cycle de stabilisation pour structurer au moins les boucles fermées continues.

2. Procédé selon la revendication 1, dans lequel chaque boucle fermée continue est enroulée séparément jusqu'à la largeur et à l'épaisseur souhaitées.

3. Procédé selon la revendication 2, comprenant en outre l'étape suivante:
- introduction de segments de charge entre les diverses boucles à leur intersection.

4. Procédé selon la revendication 1, dans lequel les boucles fermées continues sont enroulées en alternance jusqu'à la largeur et à l'épaisseur souhaitées.

5. Procédé selon la revendication 4, comprenant en outre l'étape suivante:
- introduction de segments de charge entre les intersections alternées des différentes boucles.

**Patentansprüche**

1. Verfahren zur Herstellung einer Rotornabe (12) eines voll gelenkig aufgehängtenen Helikopter Rotorsystems, bei dem die Rotornabe (12) aus einem Mittelbereich (34)und wenigstens zwei Paar Laschenarmen (36,40;38,42) besteht, und jeder Aufhängelaschenarm, ausgehend von dem Mittelbereich (3,4), ein Paar Laschen (44,46;52,54;48,50;56,58) aufweist, beinhaltend folgende Schritte: die Bildung eines Aufnahmeteils (60), das einen Mittelbereich (62) und eine gleiche Zahl von Paaren von Laschenarmen (64,68;66,70) wie die Rotornabe (12), die von dem Mittelbereich (62) ausgehen, aufweist; das Aufbringen zusammengesetzten Materials auf dem Aufnahmeteil (60) und das Wickeln des aufgebrachten Materials um ein Laschenpaar (72,82;74,80;76,86;78,84) und dem diesem zugeordneten Teil des Mittelbereichs (62) des Aufnahmeteils (60), um eine kontinuierliche geschlossene Schleife aus zusammengesetztem Material in gewünschter Breite und Dicke zu formen; das Wiederholen des Wicklungsschritts für jedes Paar Laschenarme (64,68;66,70) und den zugeordneten Teil des Mittelbereichs (62) des Aufnahmeteils (60), um dadurch so viele kontinuierliche geschlossene Schleifen aus zusammengesetztem Material zu formen wie Laschenarme (64,68;66,70) vorhanden sind; und das Behandeln der Anordnung, einschließlich des Aufnahmeteils (60) und der gewickelten kontinuierlichen geschlossenen Schleifen in einem Aushärte-Zyklus, um zumindest die kontinuierlichen geschlossenen Schleifen zu strukturialisieren.

2. Verfahren nach Anspruch 1, bei dem jede kontinuierliche geschlossene Schleife einzeln auf die gewünschte Breite und Dicke gewickelt wird.

3. Verfahren nach Anspruch 2, bei dem ferner folgender Arbeitsschritt vorgenommen wird: Das Einsetzen von Füllsegmenten zwischen die verschiedenen Schleifen an ihren Überschneidungen.

4. Verfahren nach Anspruch 1, bei dem die kontinuierlichen geschlossenen Schleifen abwechselnd auf die gewünschte Breite und Dicke gewickelt werden.

5. Verfahren nach Anspruch 4, bei dem ferner der folgende Arbeitsschritt vorgenommen wird: Das Einsetzen von Füllsegmenten zwischen die ineinander verwobenen Überschneidungen der verschiedenen Schleifen.

FIG 1

FIG 2

FIG 3

FIG 4